# EUROPÄISCHE PATENTSCHRIFT

(11) **EP 3 302 948 B1**
(45) Veröffentlichungstag und Bekanntmachung des Hinweises auf die Patenterteilung: **15.04.2020**
(21) Anmeldenummer: 16741528.0
(22) Anmeldetag: 25.05.2016
(51) Int. Cl.: B29D 30/06

(54) **SCHLIESSKRAFTEINHEIT**
CLOSING FORCE UNIT
UNITÉ D'APPLICATION DE FORCE DE FERMETURE

(30) Priorität: 28.05.2015 DE 102015007201; 09.03.2016 DE 102016003071
(43) Veröffentlichungstag der Anmeldung: 11.04.2018
(73) Patentinhaber: Harburg-Freudenberger Maschinenbau GmbH, 21079 Hamburg (DE)
(72) Erfinder: BAHLKE, Stefan, 21337 Lüneburg (DE)
(74) Vertreter: Klickow & Wetzel PartGmbB
(86) Internationale Anmeldenummer: PCT/DE2016/000226
(87) Internationale Veröffentlichungsnummer: WO 2016/188511

(56) Entgegenhaltungen:
- DE-A1-102014 001 643
- US-A- 4 969 812
- US-A- 5 759 587
- US-A- 5 866 170
- US-A1- 2015 079 210

## Beschreibung

Die Erfindung betrifft eine Schließkrafteinheit für den Behandlungsraum einer Reifenvulkanisiermaschine, aufweisend eine Grundplatte sowie wenigstens einen Linearantrieb zur Verschiebung und Kraftbeaufschlagung einer Formdruckplatte, wobei der wenigstens eine Linearantrieb integraler Bestandteil der Grundplatte ist, sodass ein kompakt-stringenter Aufbau der Schließkrafteinheit unterstützt ist
Weiterhin betrifft die Erfindung eine Reifenvulkanisiermaschine mit einer derartigen Schließkrafteinheit.

Die Herstellung eines Reifens beispielsweise für Fahrzeuge wie Autos, Lastkraftwagen oder Motorräder ist ein extrem aufwändiger Prozess, der aus einer Vielzahl von Herstellung- und Prozessschritten besteht. Ursächlich dafür ist der komplizierte, aus einer erheblichen Zahl von verschiedenen Einzelkomponenten bestehende Reifenaufbau. Hinzu kommt, dass diese Vielzahl von Komponenten unter Druck- und Temperatureinwirkung, der sogenannten Vulkanisierung, miteinander verbunden werden müssen. Der Vulkanisierungsprozess ist ebenfalls maßgeblich hinsichtlich der Material- und Haftungseigenschaften des fertigen Reifens.

Aus diesem Grund ist einer der wesentlichen Produktionsschritte zur Herstellung von Reifen das Vulkanisieren von Reifenrohlingen hin zu einem fertigen Reifen. Dazu wird der Reifenrohling in eine Form beziehungsweise Reifenform eingelegt, die sich innerhalb einer Reifenvulkanisiermaschine befindet und anschließend auf die materialabhängige Vulkanisiertemperatur erwärmt sowie mit einem Vulkanisierdruck innenseitig des Reifenrohlings beaufschlagt. Um die Vulkanisiertemperatur und den Vulkanisierdruck zu erreichen, wird ein geeignetes Heizmedium mit einer entsprechenden Temperatur und unter Druckbeaufschlagung in den Innenraum des Reifenrohlings eingebracht.

Grundsätzlich hat die Vulkanisation das Ziel, einen Reifenrohling durch Temperatur- und Druckbeaufschlagung innerhalb einer oder mehrerer Zeitintervalle praktisch "fertig zu backen", das heißt die Komponenten des Reifenrohlings miteinander zu verbinden und den Basismaterialien sowie der Gummi-/Kautschukschicht durch Vernetzungsprozesse elastische Eigenschaften einzuprägen. Dazu sind neben der eigentlichen Druck- und Temperaturbeaufschlagung weiterhin unterschiedliche, auf den Basiswerkstoff abgestimmte Additivsubstanzen für die Vernetzung und ggf. die Vernetzungsbeschleunigung erforderlich.

Zur Durchführung einer Vulkanisierung des elastomeren Materials muss eine beträchtliche Wärmeenergiemenge in das Material eingebracht werden. Dazu ist es überwiegend nicht ausreichend, den zu vulkanisierenden Reifenrohling innenseitig mit einer Vulkanisierungstemperatur und einem Vulkanisierungsdruck zu beaufschlagen.

Um die für den Vulkanisationsprozess erforderliche Wärmeenergiemenge und Druckbeaufschlagung zu realisieren, wird alternativ oder additiv außenseitig des Reifenrohlings in der Vulkanisiermaschine eine Druck- und, oder Temperatureinwirkung auf den Reifenrohling vorgesehen. Dazu ist üblicherweise eine Behandlungskammer installiert, die als Reifenform bezeichnet wird und geöffnet beziehungsweise geschlossen werden kann, sodass der zu vulkanisierende Reifenrohling eingelegt, vulkanisiert und entnommen werden kann.

Besonders dicke Bereiche des Reifenrohlings sind die Laufflächen. Relativ dünn sind die Seitenwandungen ausgebildet. Ursächlich für diesen deutlichen Dickenunterschied sind die im Bereich der Lauffläche angeordneten zusätzlichen Reifenkomponenten wie Stahlgürtel, Gürtelabdecklage und die im Vergleich zur Seitenwandung erheblich dickere Gummi-/Kautschukschicht. Diese erheblich dickere Gummi-/Kautschukschicht weist nicht zuletzt deshalb mehr Wanddicke auf, weil sie das eigentliche Reifenprofil umfasst, das während des Vulkanisierprozesses hergestellt wird. Dazu muss der Laufflächenbereich bzw. die dort vorgesehene dickwandige Gummi-/Kautschukmasse soweit erhitzt werden, dass sie plastisch fließen kann und durch den Vulkanisationsdruck in die Profil-Negativmatrize der Reifenrohlingsform der Reifenvulkanisiermaschine gepresst werden kann. Die plastische Fließfähigkeit nimmt in einem weiten Bereich mit steigender Erhitzung des Materials zu, sodass weniger Pressdruck erforderlich ist, um die Profilierung zuverlässig herstellen zu können.

Dem allgemeinen physikalischen Prinzip der allseitigen Druckausbreitung folgend, muss der Behandlungsraum, das heißt die Reifenform die Press- und Druckkräfte sowohl in radialer als auch in axialer Richtung, abstützen und aufnehmen. Infolge dessen müssen die Bewegungseinrichtungen zum Öffnen und Schließen der Reifenform, unabhängig davon, ob sich die Reifenform längs oder quer zur Rotationsachse des zu vulkanisierenden Reifens üblicherweise nicht nur die Kräfte zur Bewegung wenigstens einer Formhälfte aufbringen, sondern auch ausreichend dimensioniert sein hinsichtlich der Schließkräfte bei der Reifenvulkanisation. Aufgrund der bis zum mehren kN erreichenden Schließkräfte werden neben mechanischen Lösungen wie beispielsweise Kniehebelkonstruktionen oder Spindeln meist Hochdruck-Fluidzylinder eingesetzt.

Die DE 10 2014 001 643 A1 beispielsweise zeigt eine Reifenheizpresse beziehungsweise Reifvulkanisiermaschine in Rahmenbauweise mit einer funktionell getrennten Zweikomponentenlösung hinsichtlich der Höhenpositionierung und der Schließkraftaufnahme. Es wird offenbart, dass die Justierung der Höhe der Form durch mindestens zwei doppeltwirkende Hydraulikzylinder und mindestens ein Führungselement verwirklicht ist, wobei das Führungselement wenigstens eine Positionssicherung durch mindestens eine Verriegelungsvorrichtung aufweist und auf diese Weise die Schließkräfte aufnehmen kann.

Um die Justierung der Höhe der Form innerhalb der Reifenheizpresse zu realisieren, wird die Höhe wenigstens einer Formhälfte durch wenigstens zwei Hydraulikzylinder bewerkstelligt. Der Energieeintrag erfolgt durch den druckbeaufschlagten Flüssigkeitsvolumenstrom in bekannter Weise dadurch, dass es durch Zuleitungen in die Fluidzylinder eingebracht wird.

Die Fluidzylinder sind als separate und einbaufertige Einheiten gestaltet und üblicherweise Zukaufteile. Infolge der erheblichen Längserstreckung einbaufertiger Fluidzylinder müssen diese Bauteile innerhalb des Maschinenbettes angeordnet werden und beeinflussen die Bauhöhe des Maschinengestells und der gesamten Reifenvulkanisiermaschine negativ, das heißt erhöhend.

Die Lehre der DE 10 2014 001 643 A1 kombiniert die Fluidzylinder zur Justierung der Höhe der Form einer Reifenheizpresse mit wenigstens einem Führungselement. Dieses Führungselement ist vorzugsweise zentrisch zu der höhenverstellbaren Formhälfte und/oder zentrisch zu der Fluidzylinder-Anordnung angebracht und zur Aufnahme von Radial- und Axialkräften konzipiert. Mit der Verwendung des wenigstens einen Führungselementes werden die Radialkräfte nicht in die Fluidzylinder eingeleitet und Schäden, zum Beispiel Undichtigkeiten, werden verhindert.

Das Führungselement ist weiterhin mit einer Verriegelungsvorrichtung ausgestattet. Diese Verriegelungsvorrichtung ermöglicht eine Festlegung des gesamten Bauelementes bestehend aus im Wesentlichen den Fluidzylindern, der Formhälfte und des an der Formhälfte festgelegten Führungselementes in axial-linearer Bewegungsrichtung. Dadurch wird erreicht, dass nachdem die Fluidzylinder die Formhälfte in die gewünschte Höhenlage justiert haben und die Verriegelungsvorrichtung aktiviert worden ist, die Fluidzylinder drucklos geschaltet werden können. Das bedeutet, dass die während des Reifenherstellungsvorganges innerhalb der Presse wirkenden linearen Kräfte in axialer Richtung, das heißt die eigentlichen Schließkräfte, nicht von den Fluidzylindern, sondern von dem Führungselement aufgenommen werden.

Eine andere Lösung besteht darin, die Schließkräfte nicht von einem Führungselement, sondern direkt und ohne Verwendung eines Führungselementes über die Fluidzylinder aufzunehmen. In diesem Fall müssen die Fluidzylinder jedoch auf die erheblich hohen Schließkräfte ausgelegt werden. Außerdem müssen die auftretenden Radialkräfte von den Kolbenstangen und Kolbenstangenführungen der Fluidzylinder aufgenommen werden.

Beide Konstruktionsvarianten zur Realisierung der Schließkraftaufnahme sind grundsätzlich sowohl in Rahmenpressen als auch in Säulenpressen oder ständeraufgebauten Reifenvulkanisiermaschinen einsetzbar, erfordern aber in jedem Fall eine entsprechend ausreichende Dimensionierung.

Die bekannten Schließkrafteinheiten weisen eine Reihe von Nachteilen auf, die sowohl einzeln als auch in Summe vorliegen können. Zwar sind als einbaufertige Einheiten käufliche Fluidzylinder an sich kostengünstig, der konstruktive Aufwand zur Integration in die Reifenvulkanisiermaschine und die sich ergebende gesteigerte Maschinenbauhöhe sind jedoch erheblich kostenintensiv und aufwändig.

Weiterhin können radial auf die Fluidzylinder wirkende Kräfte deren Lebensdauer und/oder die Dichtigkeit sehr negativ, das heißt verkürzend beeinflussen. Käufliche Fluidzylinder-Baueinheiten sind üblicherweise nicht oder nur in geringem Maße geeignet und ausgelegt zur Radialkraftaufnahme. Die infolge dessen erforderliche Konstruktion einer Radialkraftaufnahmeeinrichtung verursacht höhere Kosten, steigert den generellen konstruktiven Aufwand und kann die Zugänglichkeit der Pressenelemente in diesem Bereich erschweren oder negativ beeinflussen.

Eine weitere Problematik kann sich ergeben dadurch, dass die Fluidzylinder-Baueinheiten in der Regel innerhalb des Maschinenbettes aufgenommen werden. Die Aufnahmebohrungen, Durchführöffnungen und Befestigungsmittel sowie teilweise erforderliche Aussparung von Verstärkungsrippen wirkt in Bezug auf die Gesamtkonstruktion festigkeitsmindernd und kann in erhöhter Verformung der tragenden Einheit resultieren.

Aus der US 5 866 170 A ist bereits eine Schließkrafteinheit für den Behandlungsraum einer Reifenvulkanisiermaschine bekannt. Für eine Formdruckplatte ist hierbei ein Linearantrieb vorgesehen. Weitere Einrichtungen zur Vulkanisierung von Reifen werden in der US 5 759 587 A, der US 4 969 812 A sowie der US 2015/079210 A1 beschrieben.

Es ist Aufgabe der Erfindung, eine Schließkrafteinheit für Reifenvulkanisiermaschinen bereitzustellen, welche die genannten Nachteile wenigstens teilweise reduziert und eine kostengünstige Gesamtkonstruktion unterstützt.

Diese Aufgabe wird erfindungsgemäß dadurch gelöst, dass der wenigstens eine Linearantrieb aus einem Kolben gebildet und in einer Bohrung der Grundplatte bewegbar aufgenommen ist, sodass der Linearantrieb integraler Bestandteil der Grundplatte ist und dass die Bohrung eine Sacklochbohrung ist.

Insbesondere ist daran gedacht, dass wenigstens ein Fluidzylinder als integrativer Bestandteil der Reifenvulkanisierform und/oder der Maschinenkomponenten ausgeführt ist.

Als Lösungsansatz ist vorgesehen, den aus Kolben und gegebenenfalls Kolbenstange sowie Zylindergehäuse bestehenden Fluidzylinder nicht als separates Zukaufteil einzubringen, sondern einen fluidischen Linearantrieb in die Grundplatte oder Basisplatte der Reifenvulkanisiermaschine in integrativer Weise zu konstruieren.

Die integrative Bauweise realisiert die Erfindung durch die direkte Nutzung der Grundplatte als Zylindergehäuse. Dazu werden entsprechend der notwendigen Anzahl der fluidischen Linearantriebe Bohrungen in die Grundplatte eingebracht, die je nach Ausführungsform des fluidischen Linearantriebs als Durchgangsbohrung und/oder als Sackloch ausgeführt sein können. Auf diese Weise können sowohl Kolben-Kolbenstangen-Linearantriebe als auch Kolben-Linearantriebe basierend auf dem Plungerzylinderprinzip integriert werden.

In einer bevorzugten Ausführungsform sieht die Erfindung in die Grundplatte integrierte Linearantriebe auf dem Plungerzylinderprinzip vor. Für diese Konstruktion sind Sacklochbohrungen in der Grundplatte vorgesehen, die in ihren Bohrungsdurchmessern mit dem jeweils eingesetzten Kolben korrespondieren und eine Spielpassung bereitstellen, die eine lineare Beweglichkeit des Kolbens in der Bohrung unterstützt. Kolben oder Sacklochbohrungen können Dichtungseinrichtungen wie beispielsweise Buchsen, Kolbenringe, Abstreifringe oder Simmerringe aufweisen, um den Austritt von Fluid aus dem konzentrischen Bewegungsringspalt zwischen Kolben und Sacklochbohrung zu reduzieren.

Insbesondere die in die Grundplatte integrierten Linearantriebe weisen gegenüber bekannten Schließkrafteinheiten erhebliche Vorteile auf:
- Durch die Nutzung der Grundplatte als Zylinder für die Kolben sind separate Zylinder nicht erforderlich und damit kostensparend, außerdem
- ist die Bauraumsituation gleich mehrfach vorteilhaft dadurch, dass sowohl reduzierte Maschinengesamthöhe als auch die kompakte Kolbenanordnung und optimal nutzbare Grundplattenfläche unterstützt ist,
- durch die dichte Kolbenanordnung sind sehr gleichmäßige und homogene Schließkrafteinleitungen in die Reifenform möglich,
- das Maschinenbett kann ohne die Aufnahmeräume und Bohrungen für Fluidzylinder festigkeitsoptimal gestaltet werden,
- die zur Verfügung stehenden Kolbenflächen können erhebliche Schließkräfte auch ohne Fluiddrücke im Hochdruckbereich realisieren, sodass kosten- und energieintensive Hochdruckaggregate für den Fluiddruckaufbau eingespart werden und der Betrieb im Niederdruckbereich unter 100 MPa, vorzugsweise bei ca. 40 MPa unterstützt ist,
- die erforderliche Zeit für den Schließkraftaufbau ist minimiert,
- die großen Kolbendurchmesser der Linearantriebe unterstützen die Radialkraftaufnahme,
- die erheblich großen Kolbenflächen der erfindungsgemäßen Lösung resultieren in einer reduzierten Flächenpressung zwischen der jeweiligen Kolbenstirnfläche und der Formdruckplatte beziehungsweise der Reifenform sodass die an diesen Stellen erforderlichen Temperaturisolationen mechanisch geringer belastet sind mit der Folge, dass
- ein kostengünstiger und, oder isolierverbesserter Werkstoff für die Temperaturisolierung einsetzbar ist und
- die Energieeffizienz der Reifenvulkanisiermaschine insgesamt durch die sich ergebenden verminderten Wärmeenergieverluste gesteigert wird.

Durch die erfindungsgemäße Konstruktion der Schließkrafteinheit mit in die Grundplatte integrierten Linearantrieben können Kosteneinsparungen erreicht werden, die bis zu 70% der Kosten vergleichbarer Lösungen mit separaten Linearantrieben in Form von Kaufteilen betragen. Zur Integration der Linearantriebe in die Grundplatte ist daran gedacht, deren Plattendicke um bis zu 150% zu erhöhen, sodass eine Dicke von ca. 250 bis 300 mm erreicht wird.

Infolge der Integration des wenigstens einen Linearantriebs als funktioneller Bestandteil der Grundplatte wird erfindungsgemäß ein kompakt-stringenter Aufbau der Schließkrafteinheit geschaffen, die als Resultat erhebliche Kosteneinsparpotentiale bietet und die genannten funktionellen Verbesserungen aufweist.

Eine der möglichen Ausführungsformen der erfindungsgemäßen Schließkrafteinheit für Reifenvulkanisiermaschinen mit wenigstens einem in die Grundplatte integriertem Linearantrieb ist in den Figuren dargestellt. Es zeigen:
- Figur 1:: ein Ausführungsbeispiel der erfindungsgemäßen Schließkrafteinheit (1) für Reifenvulkanisiermaschinen (200) in einer perspektivischen Gesamtdarstellung der Reifenvulkanisiermaschine (200) mit einem Teilschnitt in der x-z-Ebene,
- Figur 2:: die perspektivische Schnittdarstellung des Vulkanisierungsraums beziehungsweise der Reifenform (30) mit Schließkrafteinheit (1) und
- Figur 3:: die perspektivische Schnittdarstellung der Schließkrafteinheit (1) in einer Detailansicht.

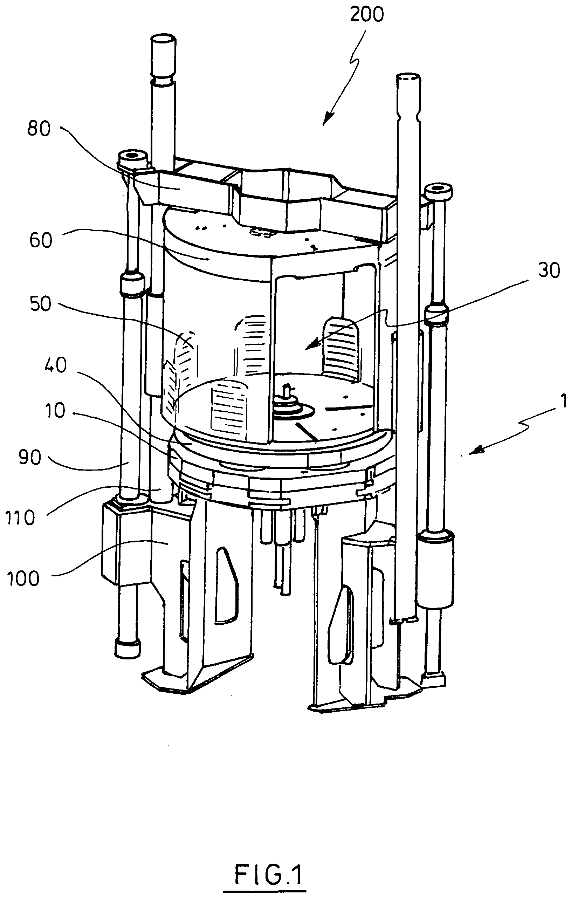

In Figur 1 ist eine Reifenvulkanisiermaschine (200) mit einem Ausführungsbeispiel der erfindungsgemäßen Schließkrafteinheit (1) als dreidimensionale Gesamtansicht illustriert. Die Reifenvulkanisiermaschine (200), die auch Reifenheizpresse genannt wird, ist in diesem Beispiel als Säulenpresse aufgebaut und verfügt in ihrer tragenden Gesamtkonstruktion über ein Maschinenbett (100) mit Säulen (110), einer Traverse (80) und einer Grundplatte (10).

Ist die Reifenheizpresse beispielsweise als Rahmen- oder Ständerpresse aufgebaut, kann die Schließkrafteinheit (1) in das Maschinengestell oder wie bei der in Figur 1 gezeigten Säulenbauweise in eine Grundplatte (10) integriert sein. Auf diese Weise ist die erfindungsgemäße Schließkrafteinheit (1) unabhängig von der Pressenbauweise und in jeder beliebigen Reifenvulkanisiermaschine (200) realisierbar.

Funktionelles Kernelement der Reifenvulkanisiermaschine (200) ist der Behandlungsraum beziehungsweise der Vulkanisierungsraum/Reifenform (30), deren räumlich Erstreckung begrenzt ist durch die Formdruckplatte (40) und die Formgegendruckplatte (60) sowie einen vorzugsweise zylindrischen Zugmantel (50). Neben der Begrenzung des Vulkanisierungsraumes (30) sind dem Zugmantel (50) zwei weitere funktionelle Aufgaben zugeordnet: Infolge der Druckkräfte innerhalb des Vulkanisierungsraumes (30) während der Vulkanisation des Reifenrohlings nimmt der Zugmantel (50) die resultierenden (Zug)Kräfte in axialer Richtung auf und er wirkt isolierend hinsichtlich der im Vulkanisierungsraum (30) herrschenden Vulkanisierungstemperaturen von bis zu 160 GradC, teilweise auch höher.

Die Formdruckplatte (40) ist sowohl linearaxial verschiebbar als auch kraftbeaufschlagbar - beides wird durch die Schließkrafteinheit (1) in die Formdruckplatte (40) eingeleitet, sodass im Vulkanisierungsraum (30) eine Presskraft aufbaubar und dessen Volumina einstellbar ist. Die Formgegendruckplatte (60) stellt zur Formdruckplatte (40) praktisch das Widerlager für die Scließ- und Presskräfte dar, wobei der Zugmantel (50) den Kraftschluss zwischen den Platten (10, 40, 60) herstellt.

Vorzugsweise ist der Zugmantel (50) an der Formgegendruckplatte (60) festgelegt und als gemeinsame Baueinheit axial verfahrbar. Geführt wird die Formgegendruckplatte (60) zusammen mit dem Zugmantel (50) über eine Traverse (80) durch zwei Säulen (110). Der axiale Verfahrantrieb für die Baueinheit Formgegendruckplatte (60) mit Zugmantel (50) ist durch zwei Fluidzylinder (90) realisiert, die eine Wirkverbindung von Traverse (80) zum Maschinenbett (100) herstellen und vorzugsweise doppeltwirkend sind.

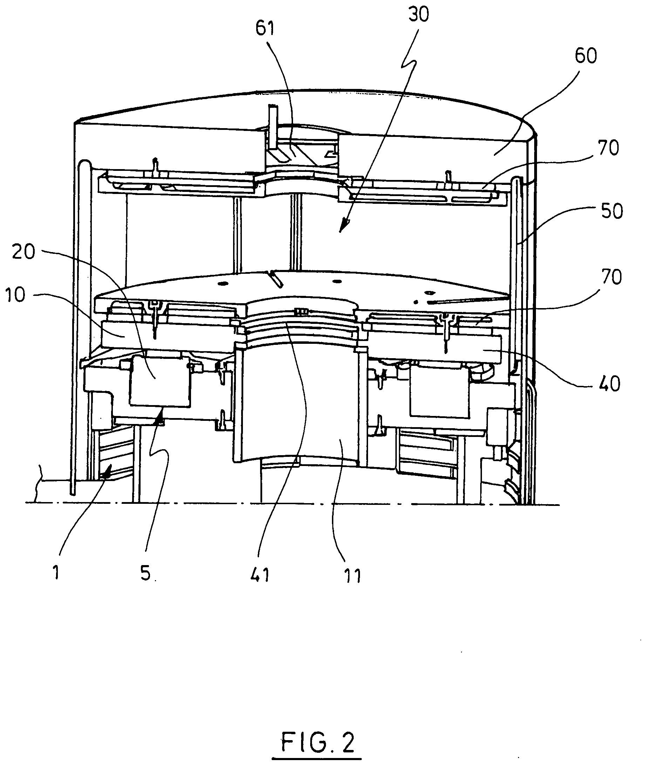

Figur 2 zeigt in perspektivischer Schnittdarstellung den Bereich des Vulkanisierungsraums (30). Wesentlich Bestandteile des Vulkanisierungsraums (30) sind die Formdruckplatte (40), die Formgegendruckplatte (60) und der Zugmantel (50). Optionale Adapterplatten (70) können zur Festlegung von Reifenformhälften an der Formdruckplatte (40) und, oder der Formgegendruckplatte (60) vorgesehen sein.

Angrenzend an den Vulkanisierungsraum (30) ist die Schließkrafteinheit (1) positioniert derart, dass sowohl die Schließkraft als auch der axial gerichtete Verschiebungsweg in die Formdruckplatte (40) eingeleitet werden kann. Das in Figur 2 gezeigte Beispiel realisiert die angrenzende Positionierung der Schließkrafteinheit (1) an den Behandlungsraum (30) durch die lotrechte und konzentrische Lage unterhalb der Formdruckplatte (40).

Sollen Vorrichtungen zur Innendruckbeaufschlagung und Wärmeenergie des zu vulkanisierenden Reifenrohlings in die Reifenform beziehungsweise dem Vulkanisierungsraum (30) benötigt werden, können Durchgangsbereiche (11, 41, 61) zur Durchführung der mechanischen Komponenten vorgesehen sein.

Um die erfindungsgemäße Schließkrafteinheit (1) im gezeigten Ausführungs- und Anordnungsbeispiel zu verwirklichen, ist in der Grundplatte (10) wenigstens ein Kolben (20) angeordnet, sodass dieser als integrierter Linearantrieb (5) die Formdruckplatte (40) verschieben und kraftbeaufschlagen kann. Besonders vorteilhaft ist die Verwendung mehrerer Kolben (20) in symmetrischer oder asymmetrischer Weise verteilt auf der Stirnseite der Grundplatte (10). Es können vier oder mehr Kolben (20) eingebaut werden, sodass
- zum einen die zur Verfügung stehende Grundplattenfläche optimal ausgenutzt wird und, oder
- eine sehr gleichmäßige Flächenpressung und Krafteinleitung von den mehreren Kolben (20) in die Formdruckplatte (40) eingeleitet werden kann und, oder
- die axiallineare Verschiebung weitgehend gleichmäßig in die Formdruckplatte (40) einleitbar und auf diese Weise ein Verkanten oder Kippen der Grundplatte (10) bei der Verschiebung reduziert ist und, oder
- eine in Summe der verwendeten Kolben (20) hohe wirksame Kolbenfläche bereitgestellt ist, sodass eine reduzierte Flächenpressung zwischen der jeweiligen Kolbenstirnflächen und der Formdruckplatte (40) herrscht und die an diesen Stellen erforderlichen Temperaturisolationen mechanisch geringer belastet sind und, oder der Niederdruckbereich des Fluids bereits in ausreichend hohen Presskräften resultiert.

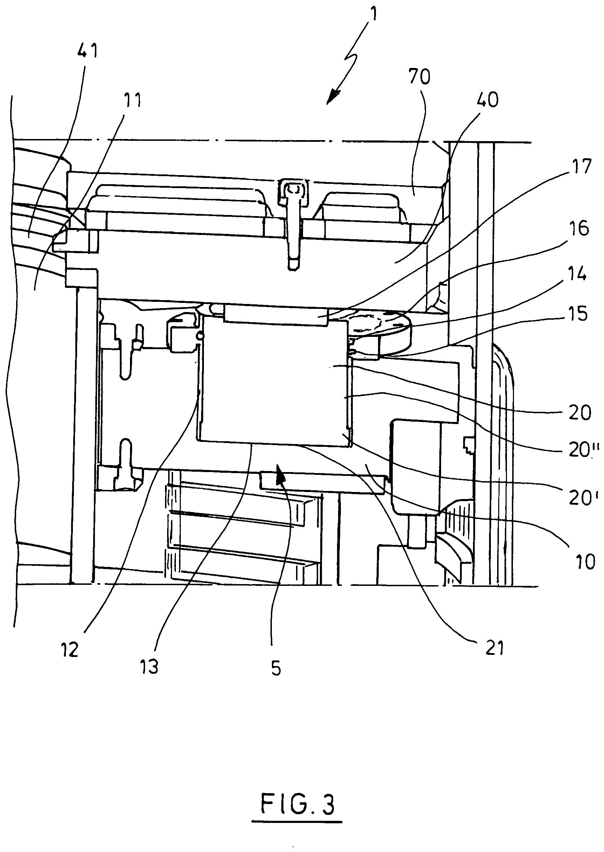

In Figur 3 ist das Ausführungsbeispiel der Schließkrafteinheit (1) aus Figur 1 und Figur 2 in perspektivischer Schnittdarstellung gezeigt. Die Grundplatte (10) ist für die Aufnahme des Kolbens (20) mit jeweils einer Sacklochbohrung (12) ausgestattet. Der Bohrungsdurchmesser realisiert mit dem Kolbendurchmesser eine Spielpassung, sodass der Kolben (20) in der Sacklochbohrung (12) in seiner axialen Richtung verschiebbar ist, wenn in den Fluidraum (13) eine Fluid wie beispielsweise Wasser oder Hydraulikoel eingebracht wird. Der Fluidraum (13) ist grundplattenseitig durch den Sacklochgrund und die Bohrungswandung definiert und begrenzt, der Kolbenboden (21) als verschiebbares Element schließt den Fluidraum (13) mit einem dadurch variablen Volumen ab.

Alternativ zu der in Figur 3 gezeigten Sacklochbohrung (12) kann die Kolbenaufnahme in der Grundplatte (10) auch durch eine Durchgangsbohrung realisiert sein, die nach der Herstellung durch eine Platte einseitig verschlossen wird. In diesem Fall wird der Fluidraum (13) durch die Platte und die Bohrungswandung definiert und begrenzt.

Um das Fluid in den Fluidraum (13) einbringen und, oder ausbringen zu können sieht die Erfindung wenigstens eine Öffnung in der Grundplatte (10) vor, die vorzugsweise als Bohrung sacklochgrundseitig ausgebildet ist (nicht abgebildet) und die Verbindung mit einem Fluidaggregat unterstützt. Alternativ oder zusätzlich kann die wenigstens eine Öffnung an der Bohrungswandung oder an dem Kolben (20) angeordnet sein.

Infolge der beträchtlichen nutzbaren Kolbenflächen sind die durch die Flächenpressungen resultierenden Schließkräfte auch bei Fluiddrücken im Niederdruckbereich ausreichend hoch, sodass die fluidischen Linearantriebe (5) und Fluidaggregate nicht in den kostspieligen Hochdruckvarianten realisiert sein müssen.

Die Kolbenkonstruktion kann erfindungsgemäß wahlweise als Plungerkolben oder als Kolben-Kolbenstangeneinheit ausgeführt sein.

Geometrisch ist der Plungerkolben ein prismatischer, vorzugsweise zylindrischer Kolben mit einem stetigen Mantel ohne Absatz. Anders ausgedrückt: Der Plungerkolben hat keine Kolbenstange, der Kolben erstreckt sich über die gesamte axiale Länge und übernimmt funktionell auch die Kolbenstangenaufgabe. Infolge dieser Ausgestaltung ist der Plungerkolben sehr einfach herstellbar und bildet zusammen mit der Aufnahmebohrung in der Grundplatte (10) einen Spielpassungsspalt, der durch seine sehr große Meridianlänge sowohl hervorragende Dichteigenschaften aufweist als auch den Plungerkolben sehr exakt führt.

Die Kolbenkonstruktion der Kolben-Kolbenstangeneinheit verfügt über einen Kolbenbereich (20') und einen Kolbenstangenbereich (20") mit einem dazwischenliegenden Absatz in Form eines konzentrischen Durchmessersprunges. Der Durchmesser im Kolbenbereich (20') ist größer als der Durchmesser im Kolbenstangenbereich (20"), sodass nur die Meridianlänge des Kolbenbereiches (20') zusammen mit der Aufnahmebohrung (12) in der Grundplatte (10) einen Spielpassungsspalt bildet. Durch den auf diese Weise gebildeten zweiten Fluidraum berandet durch die Bohrungswandung, den konzentrischen Durchmessersprung und die Aussenwandung des Kolbenstangenbereiches (20") kann der Linearantrieb (5) doppeltwirkend ausgeführt werden.

Um den Austritt von Fluid aus dem Spielpassungsspalt zu reduzieren, sieht die Erfindung wenigstens eine Dichtung (14) jeweils zugeordnet einem Linearantrieb (5) der Schließkrafteinheit (1) vor. Die Dichtung (14) kann beispielsweise ein O-Ring oder ein Simmering sein. Zusätzlich kann eine Abstreifring (15) vorgesehen sein, der mit der Dichtung (14) zusammenwirkt.

Die Lage der Dichtung (14) und des Abstreifers (15) kann verschieden realisiert sein: Im gezeigten Beispiel ist ein Ring (16) an der Grundplatte (10) kolbenaustrittsseitig der Bohrung (12) reversibel festgelegt und innenseitig mit entsprechenden Ringnuten zur Aufnahme der Dichtung (14) und des Abstreifers (15) ausgestattet. Wird kein Ring (16) verwendet, können die Nuten und damit die Lage der Dichtung (14) und des Abstreifers (15) beispielsweise innerhalb der Bohrung (12) oder/und in der Kolbenseitenfläche angeordnet werden.

Der Ring (16) kann optional weitere konstruktive und funktionelle Merkmale aufweisen. Beispielsweise kann ein Kragen angearbeitet sein der in die Bohrung (12) hineinragt und als Buchse ausgebildet ist. Weiterhin kann der Ring (16) funktionell mit dem Absatz des Kolbens (20) zwischen dem Kolbenbereich (20') und dem Kolbenstangenbereich (20") als Anschlag wirken und auf diese Weise die lineare Ausfahrbewegung des Kolbens (20) begrenzen.

Stirnseitig des Kolbens (20) und angrenzend zur Formdruckplatte (40) sind üblicherweise Temperaturisolationsmaßnahmen erforderlich, um den Wärmeübergang in den wenigstens einen Kolben (20) und Grundplatte (10) aus dem Vulkanisierungsraum (30) zu reduzieren.

Aufgrund der durch die erfindungsgemäße Lehre bereitgestellte sehr große Kolbenstirnfläche und der in Summe großen Kontaktflächen der vorzugsweise zum Einsatz kommenden mehreren Kolben (20) ist trotz hoher realisierbarer Schließkräfte der Schließkrafteinheit (1) die Flächenpressung, die auf die Kontaktflächen wirkt vergleichsweise gering. Die reduzierte Flächenpressung in diesen Bereichen unterstützt den Einsatz von Temperaturisolationselementen (17) mit geringeren Druckfestigkeitseigenschaften. Als Resultat können Isolationswerkstoffe zum Einsatz kommen, die kostengünstiger sind und/oder höhere Isolationseigenschaften aufweisen.

Die Temperaturisolationselemente (17) können durch verschiedene Dicken gleichzeitig dazu genutzt werden, Form- und Maßtoleranzen auszugleichen und auf diese Weise Höhenunterschiede bei der Verwendung mehrerer Linearantriebe (5) zu nivellieren.

## Patentansprüche

1. Schließkrafteinheit (1) für den Behandlungsraum (30) einer Reifenvulkanisiermaschine (200), aufweisend eine Grundplatte (10) sowie wenigstens einen Linearantrieb (5) zur Verschiebung und Kraftbeaufschlagung einer Formdruckplatte (40), wobei der wenigstens eine Linearantrieb (5) integraler Bestandteil der Grundplatte (10) ist, sodass ein kompakt-stringenter Aufbau der Schließkrafteinheit (1) unterstützt ist, **dadurch gekennzeichnet, dass** der wenigstens eine Linearantrieb (5) aus einem Kolben (20) gebildet und in einer Bohrung (12) der Grundplatte (10) bewegbar aufgenommen ist, sodass der Linearantrieb (5) integraler Bestandteil der Grundplatte (10) ist und dass die Bohrung (12) eine Sacklochbohrung ist.

2. Schließkrafteinheit (1) nach Anspruch 1, **dadurch gekennzeichnet, dass** der Kolben (20) ein Plungerkolben ist.

3. Schließkrafteinheit (1) nach Anspruch 1, **dadurch gekennzeichnet, dass** der Kolben (20) eine Kolben-Kolbenstangen-Kombination ist aufweisend einen Kolbenbereich (20') und einen Kolbenstangenbereich (20").

4. Schließkrafteinheit (1) nach Anspruch 3, **dadurch gekennzeichnet, dass** der Übergang zwischen dem Kolbenbereich (20') und dem Kolbenstangenbereich (20") durch einen vorzugsweise konzentrischen Durchmessersprung gebildet ist.

5. Schließkrafteinheit (1) nach Anspruch 1, **dadurch gekennzeichnet, dass** die Bohrung (12) und der Kolben (20) derart ausgebildet sind, dass zwischen ihnen ein Spielpassungsspalt realisiert ist, sodass der Kolben (20) in der Bohrung (12) der Grundplatte (10) bewegbar aufgenommen ist.

6. Schließkrafteinheit (1) nach Anspruch 5, **dadurch gekennzeichnet, dass** der Spielpassungsspalt ein konzentrischer Ringspalt ist.

7. Schließkrafteinheit (1) nach Anspruch 5, **dadurch gekennzeichnet, dass** wenigstens eine Dichtung (14) dem Linearantrieb (5) derart zugeordnet ist, sodass ein Austritt von Fluid aus dem Spielpassungsspalt reduziert ist.

8. Schließkrafteinheit (1) nach Anspruch 7, **dadurch gekennzeichnet, dass** die wenigstens eine Dichtung (14) ein O-Ring oder ein Simmering ist.

9. Schließkrafteinheit (1) nach Anspruch 8, **dadurch gekennzeichnet, dass** wenigstens ein Abstreifer (15) dem Linearantrieb (5) derart zugeordnet ist, sodass ein Abstreifen von Fluid am aus der Bohrung (12) austretenden Bereich der Kolbenwandung unterstützt ist.

10. Schließkrafteinheit (1) nach Anspruch 7 oder 9, **dadurch gekennzeichnet, dass** die wenigstens eine Dichtung (14) und, oder der wenigstens eine Abstreifer (15) der Kolbenwandung und, oder der Bohrungswandung und, oder einem Ring (16) zugeordnet ist.

11. Schließkrafteinheit (1) nach Anspruch 1, **dadurch gekennzeichnet, dass** ein erster Fluidraum (13) vorgesehen ist, der grundplattenseitig durch die Bohrungswandungen definiert und begrenzt ist und der Kolbenboden (21) als verschiebbares Element den Fluidraum (13) mit einem dadurch variablen Volumen abschließt.

12. Schließkrafteinheit (1) nach Anspruch 11, **dadurch gekennzeichnet, dass** der Fluidraum (13) wenigstens eine Öffnung aufweist, sodass Einbringen und, oder Ausbringen von Fluid in den Fluidraum (13) unterstützt ist.

13. Schließkrafteinheit (1) nach Anspruch 11, **dadurch gekennzeichnet, dass** das Fluid ein Hydraulikoel oder Wasser ist.

14. Schließkrafteinheit (1) nach Anspruch 11, **dadurch gekennzeichnet, dass** das Einbringen von Fluid in den Fluidraum (13) unter Niederdruckbedingungen erfolgt.

15. Schließkrafteinheit (1) nach Anspruch 14, **dadurch gekennzeichnet, dass** die Niederdruckbedingung unterhalb von 100 MPa liegt, vorzugsweise bei ca. 40 MPa.

16. Schließkrafteinheit (1) nach Anspruch 1, **dadurch gekennzeichnet, dass** stirnseitig des wenigstens einen Kolbens (20) ein Temperaturisolationselement (17) vorgesehen ist.

17. Reifenvulkanisiermaschine (200) aufweisen eine Schließkrafteinheit (1) nach einem der vorgehenden Ansprüche.

## Claims

1. Closing force unit (1) for the treatment chamber (30) of a tire vulcanization machine (200), having a base plate (10) and at least one linear drive (5) for the displacement of and exertion of force on a mold pressure plate (40), wherein the at least one linear drive (5) is an integral constituent part of the base plate (10), such that a compact stringent structure of the closing force unit (1) is supported, **characterized in that** the at least one linear drive (5) is formed from a piston (20) and is received in movable fashion in a bore (12) of the base plate (10), such that the linear drive (5) is an integral constituent part of the base plate (10) and **in that** the bore (12) is a blind bore.

2. Closing force unit (1) according to Claim 1, **characterized in that** the piston (20) is a plunger piston.

3. Closing force unit (1) according to Claim 1, **characterized in that** the piston (20) is a piston-piston rod combination having a piston region (20') and a piston rod region (20").

4. Closing force unit (1) according to Claim 3, **characterized in that** the transition between the piston region (20') and the piston rod region (20") is formed by a preferably concentric diameter step.

5. Closing force unit (1) according to Claim 1, **characterized in that** the bore (12) and the piston (20) are formed such that a clearance fit gap is realized between them, such that the piston (20) is received in movable fashion in the bore (12) of the base plate (10).

6. Closing force unit (1) according to Claim 5, **characterized in that** the clearance fit gap is a concentric ring-shaped gap.

7. Closing force unit (1) according to Claim 5, **characterized in that** at least one seal (14) is assigned to the linear drive (5) such that an escape of fluid from the clearance fit gap is reduced.

8. Closing force unit (1) according to Claim 7, **characterized in that** the at least one seal (14) is an O-ring or a Simmerring.

9. Closing force unit (1) according to Claim 8, **characterized in that** at least one stripper (15) is assigned to the linear drive (5) such that stripping of fluid from that region of the piston wall which emerges from the bore (12) is supported.

10. Closing force unit (1) according to Claim 7 or 9, **characterized in that** the at least one seal (14) and/or the at least one stripper (15) is assigned to the piston wall and/or to the bore wall and/or to a ring (16).

11. Closing force unit (1) according to Claim 1, **characterized in that** a first fluid chamber (13) is provided which is defined and delimited at the base plate side by the bore walls, and the piston crown (21) as a displaceable element closes off the fluid chamber (13) with a thereby variable volume.

12. Closing force unit (1) according to Claim 11, **characterized in that** the fluid chamber (13) has at least one opening, such that an introduction and/or discharge of fluid into and/or from the fluid chamber (13) is supported.

13. Closing force unit (1) according to Claim 11, **characterized in that** the fluid is a hydraulic oil or water.

14. Closing force unit (1) according to Claim 11, **characterized in that** the introduction of fluid into the fluid chamber (13) is performed under low-pressure conditions.

15. Closing force unit (1) according to Claim 14, **characterized in that** the low-pressure condition lies below 100 MPa, preferably at approximately 40 MPa.

16. Closing force unit (1) according to Claim 1, **characterized in that** a temperature insulation element (17) is provided on a face side of the at least one piston (20).

17. Tire vulcanization machine (200) having a closing force unit (1) according to one of the preceding claims.

## Revendications

1. Unité d'application de force de fermeture (1) pour l'espace de traitement (30) d'une machine de vulcanisation de pneus (200), présentant une plaque de base (10) ainsi qu'au moins un entraînement linéaire (5) pour le déplacement et la sollicitation par force d'une plaque de pression de moulage (40), l'au moins un entraînement linéaire (5) faisant partie intégrante de la plaque de base (10) de telle sorte qu'une construction compacte rigoureuse de l'unité d'application de force de fermeture (1) soit supportée, **caractérisée en ce que** l'au moins un entraînement linéaire (5) est formé par un piston (20) et est reçu de manière déplaçable dans un alésage (12) de la plaque de base (10) de telle sorte que l'entraînement linéaire (5) fasse partie intégrante de la plaque de base (10) et **en ce que** l'alésage (12) est un alésage borgne.

2. Unité d'application de force de fermeture (1) selon la revendication 1, **caractérisée en ce que** le piston (20) est un piston plongeur.

3. Unité d'application de force de fermeture (1) selon la revendication 1, **caractérisée en ce que** le piston (20) est une combinaison de piston et de tige de piston, présentant une région de piston (20') et une région de tige de piston (20").

4. Unité d'application de force de fermeture (1) selon la revendication 3, **caractérisée en ce que** la transition entre la région de piston (20') et la région de tige de piston (20") est formée par un saut de diamètre de préférence concentrique.

5. Unité d'application de force de fermeture (1) selon la revendication 1, **caractérisée en ce que** l'alésage (12) et le piston (20) sont réalisés de telle sorte qu'une fente d'ajustement de jeu soit réalisée entre eux, de telle sorte que le piston (20) soit reçu de manière déplaçable dans l'alésage (12) de la plaque de base (10).

6. Unité d'application de force de fermeture (1) selon la revendication 5, **caractérisée en ce que** la fente d'ajustement de jeu est une fente annulaire concentrique.

7. Unité d'application de force de fermeture (1) selon la revendication 5, **caractérisée en ce qu'**au moins un joint d'étanchéité (14) est associé à l'entraînement linéaire (5) de telle sorte qu'une sortie de fluide hors de la fente d'ajustement de jeu soit réduite.

8. Unité d'application de force de fermeture (1) selon la revendication 7, **caractérisée en ce que** l'au moins un joint d'étanchéité (14) est un joint torique ou un joint Simmering.

9. Unité d'application de force de fermeture (1) selon la revendication 8, **caractérisée en ce qu'**au moins un racloir (15) est associé à l'entraînement linéaire (5) de telle sorte qu'un raclage du fluide sur la région de la paroi du piston sortant de l'alésage (12) soit supporté.

10. Unité d'application de force de fermeture (1) selon la revendication 7 ou 9, **caractérisée en ce que** l'au moins un joint d'étanchéité (14) et/ou l'au moins un racloir (15) est/sont associé(s) à la paroi de piston et/ou à la paroi de l'alésage et/ou à une bague (16).

11. Unité d'application de force de fermeture (1) selon la revendication 1, **caractérisée en ce qu'**un premier espace de fluide (13) est prévu, lequel est défini et limité du côté de la plaque de base par les parois de l'alésage, et le fond de piston (21), en tant qu'élément déplaçable, termine l'espace de fluide (13) avec un volume de ce fait variable.

12. Unité d'application de force de fermeture (1) selon la revendication 11, **caractérisée en ce que** l'espace de fluide (13) présente au moins une ouverture de telle sorte que l'entrée et/ou la sortie de fluide dans l'espace de fluide (13) soient supportées.

13. Unité d'application de force de fermeture (1) selon la revendication 11, **caractérisée en ce que** le fluide est une huile hydraulique ou de l'eau.

14. Unité d'application de force de fermeture (1) selon la revendication 11, **caractérisée en ce que** l'entrée de fluide dans l'espace de fluide (13) s'effectuent dans des conditions de basse pression.

15. Unité d'application de force de fermeture (1) selon la revendication 14, **caractérisée en ce que** la condition de basse pression est en dessous de 100 MPa, de préférence d'environ 40 MPa.

16. Unité d'application de force de fermeture (1) selon la revendication 1, **caractérisée en ce que** du côté frontal d'au moins un piston (20) est prévu un élément d'isolation thermique (17).

17. Machine de vulcanisation de pneus (200) présentant une unité d'application de force de fermeture (1) selon l'une quelconque des revendications précédentes.
